(19) Europäisches Patentamt
European Patent Office
Office européen des brevets

(11) **EP 3 326 308 B1**

(12) **FASCICULE DE BREVET EUROPEEN**

(45) Date de publication et mention
de la délivrance du brevet:
**17.03.2021   Bulletin 2021/11**

(51) Int Cl.:
*H04B 17/21* *(2015.01)*      *H04B 17/13* *(2015.01)*

(21) Numéro de dépôt: **16742292.2**

(22) Date de dépôt: **22.07.2016**

(86) Numéro de dépôt international:
**PCT/EP2016/067521**

(87) Numéro de publication internationale:
**WO 2017/013244 (26.01.2017 Gazette 2017/04)**

(54) **DISPOSITIF ET PROCÉDÉ D'ÉTALONNAGE D'UNE CHAÎNE DE RÉCEPTION RADIOFRÉQUENCE LARGE BANDE**

VORRICHTUNG UND VERFAHREN ZUR KALIBRIERUNG EINER BREITBANDIGEN HOCHFREQUENZEMPFANGSKETTE

DEVICE AND METHOD FOR CALIBRATING A WIDEBAND RADIO FREQUENCY RECEIVE CHAIN

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité:  **23.07.2015   FR 1501577**

(43) Date de publication de la demande:
**30.05.2018   Bulletin 2018/22**

(73) Titulaire: **Thales**
**92400 Courbevoie (FR)**

(72) Inventeur: **SEGALEN, Rémi**
**29238 Brest Cedex 2 (FR)**

(74) Mandataire: **Lavoix**
**2, place d'Estienne d'Orves**
**75441 Paris Cedex 09 (FR)**

(56) Documents cités:
**US-A1- 2001 012 770     US-A1- 2009 298 422**

## Description

La présente invention concerne un dispositif et un procédé d'étalonnage de la mesure de la puissance des signaux avec une chaîne de réception radiofréquence large bande.

L'invention trouve une application particulière dans le domaine de la radiogoniométrie d'amplitude large bande pour la localisation des sources d'émission dans des bandes radiofréquence.

Une chaîne de réception radiofréquence est branchée en sortie d'une antenne de réception et comprend un bloc d'entrée et un ensemble de modules matériels et de moyens de calcul numérique, par exemple un processeur de calcul.

Dans le domaine de la radiogoniométrie, plusieurs antennes de réception et plusieurs chaînes de réception sont utilisés pour permettre la mesure de la direction d'arrivée du signal provenant d'une source d'émission. Dans ce domaine, plusieurs techniques existent. Parmi elles, une est couramment utilisée pour sa simplicité de mise en œuvre, il s'agit de la radiogoniométrie d'amplitude. Celle-ci est basée sur l'utilisation de la puissance des signaux délivrés par un réseau d'antennes directives, dont le pointage est généralement équiréparti sur la plage angulaire d'intérêt, très généralement 360° dans le plan horizontal pour mesurer le gisement. Pour cette radiogoniométrie, il est nécessaire d'avoir une bonne précision de mesure de la puissance du signal radiofréquence reçu par chaque antenne de réception. Cependant, chaque chaîne de réception induit des imprécisions de mesure qui lui sont propres. Afin d'obtenir une bonne précision de mesure, il est nécessaire d'étalonner chaque chaîne de réception radiofréquence.

Une chaîne de réception large bande est composée d'un ensemble de plusieurs modules de traitement, connectés entre eux par des câbles pouvant avoir une longueur de plusieurs mètres.

Il est connu d'utiliser un système d'injection et de mesure d'un signal d'étalonnage, qui nécessite un générateur de signal radiofréquence large bande injecté en entrée de la chaîne de réception et un dispositif de mesure de la puissance dudit signal radiofréquence en entrée et en sortie de la chaîne de réception. Un tel système est complexe et encombrant.

La demande de brevet US2009/0298422 A1 décrit un procédé d'étalonnage en puissance d'une chaîne de réception radiofréquence.

La demande de brevet US2001/0012770 A1 décrit un procédé d'étalonnage d'un récepteur dans un système de télécommunications.

Le brevet US 6,700,537 B1 décrit un système de calibration de récepteur radiofréquence large bande d'un système de localisation, comportant au moins deux voies de traitement. Ce brevet propose d'utiliser une source de bruit unique pour la calibration, le bruit étant distribué sur les voies de traitement. Ce système de calibration nécessite un système de distribution du bruit vers les diverses voies et ne permet qu'une calibration relative entre les diverses voies utilisées.

L'invention a pour objet de remédier aux inconvénients précités, en proposant un procédé et un dispositif d'étalonnage pour chaîne de réception radiofréquence large bande, qui soit moins complexe et qui présente une meilleure précision d'étalonnage que les systèmes connus.

A cet effet, l'invention a pour objet un procédé d'étalonnage en puissance d'une chaîne de réception radiofréquence large bande, apte à recevoir un signal radiofréquence d'entrée d'une antenne de réception, dans une bande de fréquence, mis en œuvre dans un dispositif d'étalonnage comprenant ladite chaîne de réception radiofréquence large bande et un moyen apte à effectuer une analyse de spectre, ladite chaîne de réception comportant un bloc d'entrée branché en entrée d'un ensemble de traitement radiofréquence, le procédé étant caractérisé en ce qu'il comprend :

- une première phase d'étalonnage du bloc d'entrée, comprenant, pour au moins une valeur de température dudit bloc d'entrée et une fréquence, la génération d'une densité spectrale de puissance de bruit donnée, au moyen d'une source de bruit sélectionnable et contrôlable du bloc d'entrée, puis le calcul et la mémorisation d'au moins une densité spectrale de puissance de bruit équivalente ramenée en entrée dudit bloc d'entrée,
- une deuxième phase d'étalonnage du gain en puissance de la chaîne de réception comprenant : la génération d'une densité spectrale de puissance de bruit donnée ; la mesure d'une densité spectrale de puissance de bruit en sortie de la chaîne de réception ; le calcul du gain en puissance de la chaîne de réception en fonction de la densité spectrale de puissance de bruit en sortie de la chaîne de réception et de la densité spectrale de puissance de bruit équivalente ramenée en entrée correspondant à la densité spectrale de puissance de bruit donnée.

Avantageusement, l'utilisation d'une source de bruit dans le bloc d'entrée d'une chaîne de réception permet un étalonnage en puissance de la chaîne de réception plus précis, tout en minimisant la complexité matérielle induite.

Le procédé selon l'invention peut également présenter une ou plusieurs des caractéristiques ci-dessous :

- dans la première phase d'étalonnage du bloc d'entrée, le calcul comprend : l'obtention d'un gain en puissance du bloc d'entrée pour ladite valeur de température et ladite fréquence ; la génération d'un bruit ayant une densité spectrale de puissance de bruit donnée et la mesure d'une densité spectrale de puissance de bruit en sortie du bloc d'entrée ; le calcul d'une densité spectrale de puissance de bruit équivalente ramenée en entrée dudit bloc d'entrée en fonction du gain en puissance du bloc d'entrée et de la densité spectrale de puissance de bruit en sortie du bloc d'entrée.

- la première phase d'étalonnage du bloc d'entrée est répétée pour une pluralité de fréquences dans la bande de fréquence de la chaîne de réception et/ou une pluralité de valeurs de température du bloc d'entrée.

- le moyen apte à effectuer une analyse de spectre étant un module de traitement de l'ensemble de traitement radiofréquence, la mesure de la densité spectrale de puissance de bruit en sortie de la chaîne de réception est obtenue en sortie dudit module de traitement.

- le moyen apte à effectuer une analyse de spectre étant un récepteur auxiliaire étalonné comprenant un analyseur de spectre et la chaîne de réception comportant un bloc de sortie branché en sortie de l'ensemble de traitement radiofréquence, propre à basculer entre une première position d'acheminement du signal radiofréquence vers une sortie principale de la chaîne de réception et une deuxième position d'acheminement du signal radiofréquence vers une sortie auxiliaire de la chaîne de réception, sur laquelle est branché, lors de l'étalonnage, le récepteur auxiliaire étalonné, le procédé comporte, en outre, une première phase d'étalonnage du bloc de sortie, consistant à calculer un écart de gain entre ladite sortie principale et ladite sortie auxiliaire, pour au moins la fréquence et la valeur de température du bloc d'entrée considérées dans la première étape de calibration du bloc d'entrée, et, dans la seconde phase, l'étape de calcul du gain en puissance de la chaîne de réception prenant également en compte ledit écart de gain introduit par le bloc de sortie.

L'invention a également pour objet un dispositif d'étalonnage en puissance d'une chaîne de réception radiofréquence large bande, tel que défini à la revendication 6.

Le dispositif selon l'invention peut également présenter une ou plusieurs des caractéristiques ci-dessous :

- ladite chaîne de réception ayant un bruit de fond propre, la puissance du bruit introduit par ladite source de bruit est supérieure à la puissance dudit bruit de fond propre de la chaîne de réception.

- l'organe de basculement est un commutateur apte à basculer entre une première position d'injection, dans le bloc de circuits aval du bloc d'entrée, du signal radiofréquence d'entrée, et une deuxième position d'injection, dans le bloc de circuits aval du bloc d'entrée, du bruit généré par la source de bruit.

- ladite source de bruit est une diode à bruit.

- le moyen apte à effectuer une analyse de spectre est un module de traitement dont est muni l'ensemble de traitement radiofréquence, la mesure de la densité spectrale de puissance de bruit en sortie de la chaîne de réception étant obtenue en sortie dudit module de traitement.

- le dispositif comporte en outre un bloc de sortie, branché en sortie de l'ensemble de traitement radiofréquence, comprenant un organe de basculement propre à basculer entre une première position d'acheminement du signal radiofréquence vers une sortie principale de la chaîne de réception et une deuxième position d'acheminement du signal radiofréquence vers une sortie auxiliaire de la chaîne de réception (60), le moyen apte à effectuer une analyse de spectre étant un récepteur auxiliaire étalonné comprenant un analyseur de spectre et branché, lors de l'étalonnage, à la sortie auxiliaire.

L'invention a également pour objet un dispositif de radiogoniométrie comprenant une pluralité de chaînes de réception radiofréquence large bande, branchée chacune à une antenne de réception, et une unité de calcul apte à calculer un angle d'incidence d'un signal radiofréquence reçu par lesdites antennes de réception, caractérisé en ce qu'il comporte, pour chacune desdites chaînes de réception, un dispositif d'étalonnage en puissance conforme au dispositif précédent.

D'autres caractéristiques et avantages de l'invention ressortiront de la description qui en est donnée ci-dessous, à titre indicatif et nullement limitatif, en référence aux figures annexées, parmi lesquelles :

- la figure 1 représente schématiquement dispositif d'étalonnage en puissance d'une chaîne de réception large bande selon un premier mode de réalisation ;
- les figures 2 et 3 représentent les principaux modules d'un bloc d'entrée d'une chaîne de réception large bande selon un premier mode de réalisation ;
- la figure 4 est un organigramme des principales étapes d'un procédé d'étalonnage d'une chaîne de réception large bande selon un mode de réalisation ;
- la figure 5 représente schématiquement le dispositif d'étalonnage d'une chaîne de réception large bande selon un deuxième mode de réalisation ;
- les figures 6 et 7 les principaux modules d'un bloc de sortie du dispositif d'étalonnage de la figure 5 ;
- la figure 8 représente schématiquement le dispositif d'étalonnage d'une chaîne de réception large bande de la figure 5 en mode étalonnage ;
- la figure 9 représente schématiquement un radiogoniomètre selon un mode de réalisation.

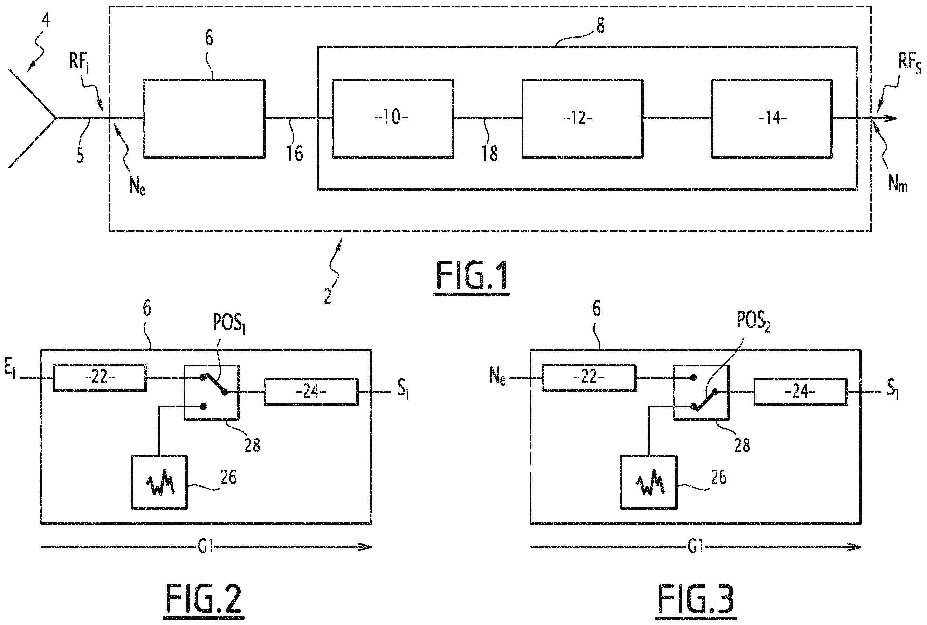

La figure 1 illustre schématiquement un dispositif d'étalonnage d'une chaîne de réception radiofréquence large bande 2. Dans cet exemple, il s'agit d'un récepteur superhétérodyne suivi d'une analyse spectrale.

La chaîne de réception 2 est branchée en sortie d'une antenne 4, et comprend plusieurs modules connectés, parmi lesquels un bloc d'entrée 6, normalement branché au plus près de l'antenne.

Dans un mode de réalisation, le bloc d'entrée 6 est branché en sortie de l'antenne 4 par un câble 5 dont la longueur est de l'ordre de 0 à 20 centimètres.

La sortie du bloc d'entrée 6 est connectée à un ensemble de traitement radiofréquence 8, comprenant des modules matériels et des moyens de calcul numérique.

L'ensemble de traitement radiofréquence 8 comprend, dans cet exemple, un module de changement de fréquence (transposition) 10, apte à convertir un signal radiofréquence RF de première fréquence donnée en un signal de deuxième fréquence FI, appelée fréquence intermédiaire, généralement inférieure à la première fréquence.

En sortie du module de changement de fréquence 10 est branché un convertisseur analogique-numérique 12, en sortie duquel est branché un module de traitement de signal 14, apte à effectuer un traitement d'analyse spectrale. Dans un mode de réalisation, le module de traitement de signal 14 est un FPGA situé sur la même carte électronique que le convertisseur analogique-numérique 12.

Les divers modules composant la chaîne de réception 2 sont connectés via des câbles 16, 18, dont la longueur cumulée peut dépasser une dizaine de mètres. Ces câbles induisent des pertes de puissance du signal radiofréquence.

Soit $RF_i$ le signal radiofréquence en entrée du récepteur 2, et $RF_s$ le signal radiofréquence en sortie du récepteur 2.

La chaîne de réception radiofréquence 2 est apte à fonctionner dans une bande de fréquence $[F_1, F_2]$, par exemple de 2 à 18GHz.

La puissance du signal est mesurée en fin de chaîne de réception, faisant que la connaissance du gain en puissance de cette chaîne de réception permet de déduire la puissance du signal en entrée de ladite chaîne.

L'invention permet justement de calculer le gain en puissance d'une chaîne de réception, pour diverses valeurs de fréquence et de température du bloc d'entrée 6, comme expliqué en détail ci-après.

Ce gain en puissance correspond au rapport de la puissance de sortie $P_s$ à la puissance d'entrée $P_i$. Il peut s'exprimer en décibels (dB) de la façon suivante :

$$G_{dB} = 10\log\left(\frac{P_s}{P_i}\right) = 10\log(P_s) - 10\log(P_i)$$

Où log() est la fonction logarithme en base 10.

En d'autres termes, le gain en puissance de la chaîne de réception est la différence entre la puissance du signal de sortie et la puissance du signal d'entrée, toutes deux exprimées en unités logarithmiques.

La puissance du signal de sortie est calculée à l'issue de l'analyse spectrale. Il s'agit du carré du module du signal complexe, au sens mathématique, correspondant à un pas de fréquence ou case de transformée de Fourier.

Le gain en puissance d'une chaîne de réception 2 telle que représentée schématiquement à la figure 1 dépend, entre autres, des câbles installés 16, 18 et de la température des différents blocs électroniques 6, 10, 12. L'étalonnage pourra idéalement être refait à chaque changement significatif de température indiqué par un capteur intégré à un des blocs. Il pourra sinon être fait seulement à l'initialisation du système en supposant que les écarts de gain différentiels liés au changement de température sont faibles.

La chaîne de réception a un bruit de fond qui lui est propre, dépendant des divers composants de cette chaîne de réception. Ce bruit propre de la chaîne de réception n'est pas connu avec précision, néanmoins il est possible de déterminer un niveau de bruit propre maximal du récepteur.

Dans un mode de réalisation du dispositif d'étalonnage de l'invention, illustré dans les figures 2 et 3, le bloc d'entrée 6 d'une chaîne de réception radiofréquence large bande 2 comprend un bloc 22 de circuits amont et un bloc 24 de circuits aval classiques. Par exemple, le bloc 22 comprend un filtre de limitation de bande de fréquence et des circuits de protection vis-à-vis des signaux forts et le bloc 24 comprend des amplificateurs et des atténuateurs variables. Il est préférable d'introduire le bruit le plus en amont possible, donc de limiter le bloc 22 à un minimum de fonctions.

Le bloc d'entrée 6 comprend en outre une source de bruit 26 et un organe de basculement 28. Ces éléments 26 et 28 sont ajoutés pour la réalisation de la fonction d'étalonnage.

L'organe de basculement 28 est par exemple un commutateur, qui, lorsqu'il est en une position $POS_2$, permet de commuter le circuit de manière à injecter le bruit fourni par la source de bruit 26 en entrée du bloc de circuits aval 24.

Ainsi, l'organe de basculement 28 permet de choisir entre le mode d'étalonnage de la chaîne de réception 2 ($POS_2$), dans lequel le bruit est injecté dans le récepteur 2 (illustré à la figure 3) et le mode de fonctionnement nominal (illustré à la figure 2), dans lequel le commutateur est dans une position $POS_1$.

En variante, l'organe de basculement 28 est un coupleur.

La source de bruit 26 fournit un bruit en mode d'étalonnage de densité spectrale donnée, la densité spectrale étant une puissance par largeur de bande de fréquence (exprimée par exemple en dBm/MHz). La densité spectrale est donc normalisée.

La source de bruit 26 est un composant ajouté dans le bloc d'entrée 6, ayant des caractéristiques déterminées pour obtenir une bonne précision d'étalonnage.

En particulier, la source de bruit 26 est choisie de manière à fournir un bruit de puissance supérieure à celle du bruit propre de la chaîne de réception.

Par exemple, pour obtenir une précision de 0,5dB, la puissance de bruit de la source de bruit 26 doit être supérieure de 10dB à la puissance de bruit propre de la chaîne de réception ramenée à l'entrée.

Dans un mode de réalisation, on utilise pour réaliser la source de bruit 26 un composant de type diode à bruit large bande ayant un ENR (« excess noise ratio ») de 30dB.

Avantageusement, un tel composant est de très petite taille.

En variante, un amplificateur est utilisé comme source de bruit 26, son entrée étant connectée à une charge adaptée et sa sortie délivrant le bruit désiré.

Ainsi, l'ajout d'un tel composant 26 et d'un commutateur 28 dans un bloc d'entrée d'une chaîne de réception radiofréquence large bande est de très faible encombrement.

De plus, lorsque l'organe de basculement 28 est dans la position $POS_1$ illustrée à la figure 2, le récepteur fonctionne en mode de réception nominal sans perturbation.

En mode d'étalonnage, la source de bruit 26 est alimentée, l'organe de basculement 28 est en position $POS_2$, et le bruit est acheminé en entrée du bloc aval 24.

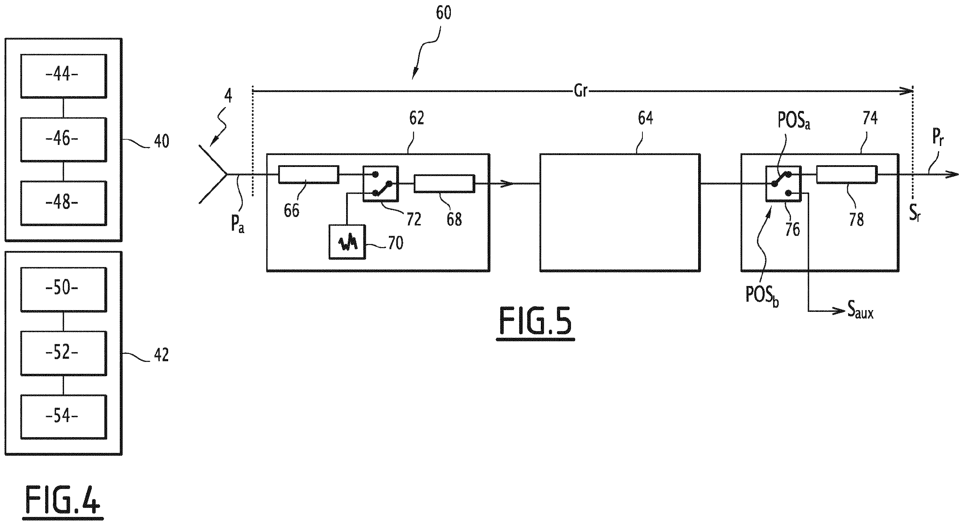

La figure 4 est un organigramme des principales étapes d'un procédé d'étalonnage de la chaîne de réception large bande selon un mode de réalisation de l'invention.

Le procédé comprend deux phases, une première phase 40 d'étalonnage du bloc d'entrée 6 vis-à-vis de la source de bruit et une deuxième phase 42 d'étalonnage de la chaîne de réception complète.

Lors d'une première étape 44 de la première phase 40, une table d'étalonnage du bloc d'entrée, qui fournit le gain en puissance entrée-sortie de ce bloc, en fonction de la fréquence $F_i$ du signal $RF_i$ en entrée et de la température $T_k$ du bloc d'entrée 6 est obtenue.

On a donc une première table d'étalonnage du bloc d'entrée comprenant des valeurs de gain en puissance du bloc d'entrée $G_1(F_i, T_k)$.

Cette première table est établie en usine, en effectuant des injections successives de signaux radiofréquence, et des mesures de puissance en entrée et en sortie du bloc d'entrée.

De préférence, un ensemble de valeurs de température $T_k$ allant de -40°C à+85°C sont considérées, et un ensemble de valeurs de fréquence $F_i$ comprises dans la bande de fréquence de la chaîne de réception, avec un pas de fréquence prédéterminé, par exemple de l'ordre de 10MHz.

En variante, une seule valeur de température T correspondant à une utilisation prévue du récepteur est considérée.

Ensuite, lors d'une étape 46 de détermination de densité spectrale de bruit, l'organe de basculement 28 est basculé en mode d'étalonnage ($POS_2$) et la source de bruit 26 est alimentée.

La densité spectrale de bruit $N_1(F_i,T_k)$ est mesurée en sortie du bloc d'entrée, pour chaque fréquence $F_i$ et chaque température $T_k$ de la première table d'étalonnage du bloc d'entrée.

Pour réaliser cette étape, un instrument de mesure, par exemple un analyseur de spectre, est branché en sortie du bloc d'entrée.

Lors d'une étape 48 de calcul de densité spectrale équivalente, on calcule, pour chaque densité spectrale de bruit $N_1(F_i, T_k)$ de sortie mesurée, la densité spectrale équivalente ramenée en entrée du bloc d'entrée, notée $N_e(F_i,T_k)$ : $N_e(F_i, T_k) = N_1(F_i, T_k) - G_1(F_i, T_k)$, sous réserve que ces expressions soient exprimées en unité logarithmiques cohérentes entre elles. La densité spectrale équivalente ramenée en entrée du bloc d'entrée est donc obtenue par un calcul mathématique.

Ces valeurs calculées sont mémorisées dans une deuxième table d'étalonnage du bloc d'entrée.

Le gain de l'organe de basculement 28 est supposé identique dans les deux positions $POS_1$ et $POS_2$.

Dans la phase 42 d'étalonnage de la chaîne de réception, lors d'une étape 50, l'organe de basculement 28 est en position $POS_2$ pour être en mode d'étalonnage, un bruit provenant de la source de bruit 26 étant injecté en entrée du bloc 24. On mesure la densité spectrale de bruit de sortie de l'analyse spectrale $N_m(F_i)$ à chaque fréquence $F_i$.

Connaissant la température $T_k$ du bloc d'entrée, et la densité spectrale équivalente en entrée, le gain en puissance de la chaîne de réception est calculé lors d'une étape de calcul 52 de la façon suivante :

$G_r(F_i, T_k)=N_m(F)-N_e(F_i,T_k)$, sous réserve que ces expressions soient exprimées en unité logarithmiques cohérentes entre elles.

Les valeurs de gain en puissance de la chaîne de réception sont mémorisées dans une table d'étalonnage de la chaîne de réception.

Dans le mode nominal d'utilisation du récepteur, les valeurs de gain en puissance de la chaîne de réception mémorisées sont utilisées pour déterminer la puissance $P_i$ d'un signal radiofréquence $RF_i$ en sortie d'antenne à partir de la puissance $P_s$ mesurée en sortie de la chaîne de réception, en fonction de la fréquence f du signal RF et de la température T mesurée ou estimée du bloc d'entrée :

$P_i = P_s - G_r(f, T)$, sous réserve que ces expressions soient exprimées en unité logarithmiques cohérentes entre elles.

La figure 5 représente un dispositif d'étalonnage d'une chaîne de réception 60 qui ne comporte pas d'analyse spectrale.

La chaîne de réception 60 comporte un bloc d'entrée 62, qui reçoit un signal radiofréquence en provenance d'une antenne 4, et un ensemble de traitement radiofréquence 64, pouvant comporter des éléments actifs et passifs dont des câbles.

Le bloc d'entrée 62 est analogue au bloc d'entrée 6 décrit précédemment.

Dans ce mode de réalisation, le bloc d'entrée 60 comporte un bloc 66 de circuits amont et un bloc 68 de circuits aval, analogues aux blocs 22 et 24 décrits précédemment.

Il comprend de plus une source de bruit 70 et un premier organe de basculement 72.

Le dispositif d'étalonnage de la figure 5 comprend en plus un bloc de sortie 74 qui est ajouté pour permettre l'étalonnage.

Ce bloc de sortie 74 comprend un deuxième organe de basculement 76, apte à basculer entre une première position $POS_a$ d'acheminement du signal radiofréquence vers un module de circuits aval 78, dont la sortie $S_r$ fournit le signal radiofréquence de sortie du récepteur. Cette position $POS_a$ correspond à un mode de fonctionnement nominal.

Le deuxième organe de basculement 76 comprend une deuxième position $POS_b$, qui achemine le signal radiofréquence vers une sortie auxiliaire $S_{aux}$, sur laquelle est branché, en mode d'étalonnage, un récepteur auxiliaire étalonné comprenant un analyseur de spectre.

Pour réaliser l'étalonnage, une première phase d'étalonnage des blocs d'entrée 62 et de sortie 74 est mise en œuvre.

L'étalonnage du bloc d'entrée 62 est analogue à l'étalonnage du bloc d'entrée 6 décrit au préalable, il n'est pas rappelé ici.

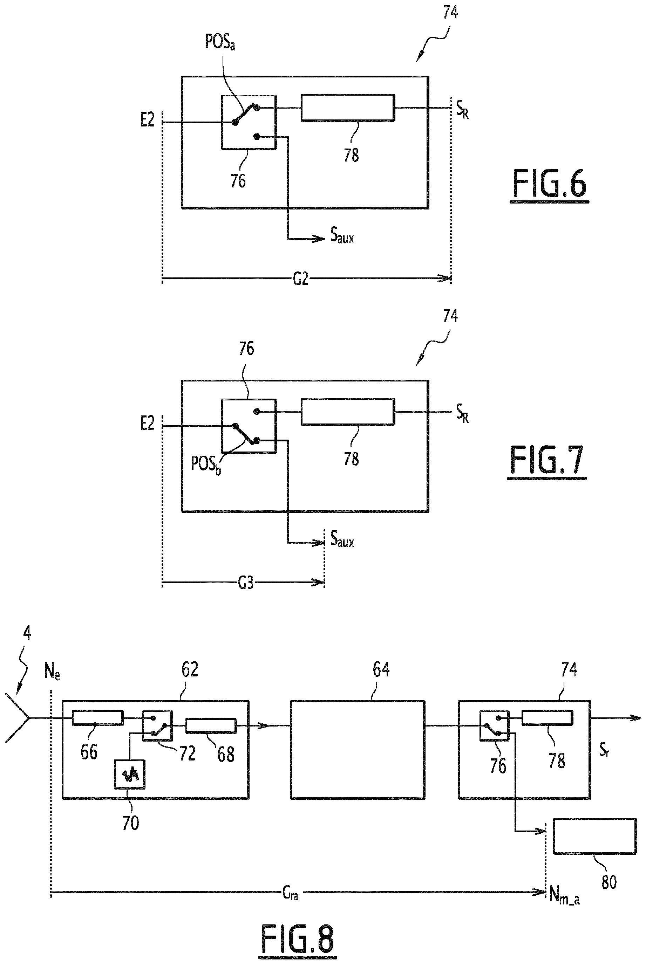

Pour l'étalonnage du bloc de sortie 74, d'une manière analogue à ce qui a été décrit pour l'étalonnage du bloc d'entrée 6, on met d'abord le deuxième organe de basculement 76 en position $POS_a$ et on mesure le gain en puissance $G_2$ (figure 6) entre l'entrée $E_2$ et la sortie $S_r$, en fonction de la fréquence et de la température du bloc d'entrée 62, en dB.

Ensuite, l'organe de basculement 76 est en position $POS_b$, et on mesure le gain en puissance $G_3$ entre l'entrée $E_2$ et la sortie auxiliaire $S_{aux}$ en fonction de la fréquence et de la température du bloc d'entrée 62, en dB.

L'écart de gain $G_4$ en dB, entre la sortie principale et la sortie auxiliaire, pour les fréquences et températures du bloc d'entrée considérées, est calculé et mémorisé dans une table d'étalonnage du bloc de sortie, soit donc :

$$G_4(F_i, T_k) = G_2(F_i, T_k) - G_3(F_i, T_k).$$

Ensuite, dans une deuxième phase, la chaîne de réception complète est étalonnée.

Les blocs d'entrée 62 et de sortie 74 sont mis en mode étalonnage via les organes de basculement 72 et 76 respectifs, comme illustré à la figure 8.

Pour réaliser cette étape, un instrument de mesure étalonné, par exemple un analyseur de spectre, est branché à la sortie auxiliaire du bloc de sortie 74.

En entrée, on injecte le bruit, via la source de bruit 70, de densité spectrale de bruit $N_e(F_i, T_k) = N_1(F_i, T_k) - G_1(F_i, T_k)$.

En sortie, on mesure la densité spectrale de bruit de sortie $N_{ma}(F_i)$.

On calcule alors $G_{ra}(F_i, T_k) = N_{ma}(F_i) - N_e(F_i, T_k)$.

Dans ce mode de réalisation, le gain en puissance de la chaîne de réception est donné par :

$$G_r(F_i, T_k) = G_{ra}(F_i, T_k) + G_4(F_i, T_k).$$

Les valeurs de gain en puissance de la chaîne de réception, pour des valeurs de fréquence $F_i$ et de température $T_k$ données, sont mémorisées dans une table d'étalonnage de la chaîne de réception.

Dans le mode nominal d'utilisation du récepteur 60, les valeurs de gain en puissance de chaîne de réception mémorisées sont utilisées pour déterminer la puissance $P_e$ d'un signal radiofréquence RF en sortie d'antenne à partir de la puissance $P_r$ mesurée en sortie de la chaîne de réception, en fonction de la fréquence f du signal RF et de la température T mesurée ou estimée du bloc d'entrée :

$$P_e = P_r - G_r(f, T).$$

L'invention trouve une application particulière dans le domaine de la radiogoniométrie d'amplitude, permettant d'établir l'angle d'arrivée $\theta$ d'un signal radiofréquence dans un référentiel donné, par exemple le référentiel d'un porteur, tel un aéronef ou un navire, sur lequel le radiogoniomètre est embarqué.

Un radiogoniomètre utilise n antennes directives, n étant supérieur ou égal à 2.

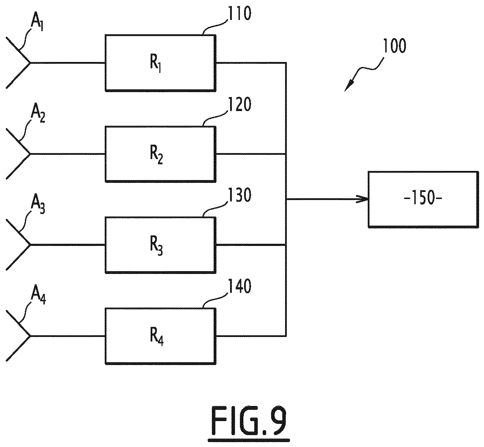

Par exemple, un radiogoniomètre 100 à quatre antennes et quatre chaînes de réception est illustré schématiquement à la figure 9.

Chacune des antennes de réception A1 à A4 est orientée selon un angle de réception prédéterminé dans un référentiel, par exemple à +45 degrés, +135 degrés +225 degrés et +315 degrés.

Un signal radiofréquence RF incident est reçu par ces quatre antennes A1 à A4, leurs différences d'orientation font qu'elles délivrent des puissances différentes.

Une chaîne de réception respective 110, 120, 130 et 140 est branchée en sortie de chaque antenne, et les puissance des signaux respectivement reçus permettent de calculer l'angle d'arrivée $\theta$ du signal radiofréquence RF incident. Le calcul est effectué par un module de calcul 150.

Le calcul est effectué par toute méthode de radiogoniométrie d'amplitude connue.

La précision de l'angle calculé dépend de la qualité de la mesure de la puissance de chaque chaîne de réception.

Avantageusement chaque chaîne de réception 110, 120, 130 et 140 est étalonnée en appliquant un des modes de réalisation décrits ci-dessus.

Ainsi, on calcule pour chaque chaîne de réception des tables d'étalonnage de gain en puissance $G_{r,i}$, avec i allant de 1 à 4 dans l'exemple précédent (quatre antennes), en fonction de diverses valeurs de fréquence et de température.

Les valeurs de gain $G_{r,i}$ calculées sont mémorisées et fournies au module 150 qui effectue les calculs.

Avantageusement, la précision de radiogoniométrie est augmentée.

L'invention s'applique notamment pour l'étalonnage en gain de chaînes de réception large bande, comportant des modules répartis sur une ou plusieurs dizaines de mètres, en particulier pour le cas où de tels récepteurs sont déjà embarqués sur un porteur. En effet, dans ce cas l'accès à certains modules de la chaîne de réception est difficile. Avantageusement, l'invention permet l'étalonnage du gain en puissance de la chaîne de réception complète sans connaissance précise des modules qui la composent à l'exception des blocs d'entrée 6 ou 62 et des blocs de sortie 74.

**Revendications**

1. Procédé d'étalonnage en puissance d'une chaîne de réception radiofréquence large bande, apte à recevoir un signal radiofréquence d'entrée d'une antenne de réception (4), dans une bande de fréquence, mis en oeuvre dans un dispositif d'étalonnage comprenant ladite chaîne de réception radiofréquence large bande et un moyen apte à effectuer une analyse de spectre, ladite chaîne de réception comportant un bloc d'entrée (6) branché en entrée d'un ensemble de traitement radiofréquence (8), le procédé étant **caractérisé en ce qu'**il comprend :

     - une première phase (40) d'étalonnage du bloc d'entrée (6), comprenant, pour au moins une valeur de température dudit bloc d'entrée et une fréquence, une génération d'une densité spectrale de puissance de bruit donnée, au moyen d'une source de bruit (26) sélectionnable et contrôlable du bloc d'entrée, puis des étapes de calcul et de mémorisation d'au moins une densité spectrale de puissance de bruit équivalente ramenée en entrée dudit bloc d'entrée,
     - une deuxième phase (42) d'étalonnage du gain en puissance de la chaîne de réception comprenant des étapes de :

     - génération (50) d'une densité spectrale de puissance de bruit donnée,
     - mesure (50) d'une densité spectrale de puissance de bruit en sortie de la chaîne de réception,
     - calcul (52) du gain en puissance de la chaîne de réception en fonction de la densité spectrale de puissance de bruit en sortie de la chaîne de réception et de la densité spectrale de puissance de bruit équivalente ramenée en entrée correspondant à la densité spectrale de puissance de bruit donnée générée dans l'étape de génération (50).

2. Procédé selon la revendication 1, **caractérisé en ce que**, dans la première phase d'étalonnage du bloc d'entrée, le calcul comprend des étapes de:

     - obtention (44) d'un gain en puissance du bloc d'entrée (6) pour ladite valeur de température et ladite fréquence,
     - génération d'un bruit ayant une densité spectrale de puissance de bruit donnée et mesure (46) d'une densité spectrale de puissance de bruit en sortie du bloc d'entrée,
     - calcul (48) d'une densité spectrale de puissance de bruit équivalente ramenée en entrée dudit bloc d'entrée en fonction du gain en puissance du bloc d'entrée et de la densité spectrale de puissance de bruit en sortie du bloc d'entrée.

3. Procédé selon la revendication 1 ou la revendication 2, **caractérisé en ce que** la première phase d'étalonnage du bloc d'entrée (6) est répétée pour une pluralité de fréquences dans la bande de fréquence de la chaîne de réception et/ou une pluralité de valeurs de température du bloc d'entrée.

4. Procédé selon l'une quelconque des revendications 1 à 3, **caractérisé en ce que**, le moyen apte à effectuer une analyse de spectre étant un module de traitement (14) de l'ensemble de traitement radiofréquence (8), la mesure de la densité spectrale de puissance de bruit en sortie de la chaîne de réception est obtenue en sortie dudit module de traitement.

5. Procédé selon l'une quelconque des revendications 1 à 3, **caractérisé en ce que**, le moyen apte à effectuer une analyse de spectre étant un récepteur auxiliaire étalonné comprenant un analyseur de spectre et **en ce que** la chaîne de réception comportant un bloc de sortie (74) branché en sortie de l'ensemble de traitement radiofréquence (64), propre à basculer entre une première position d'acheminement du signal radiofréquence vers une sortie principale de la chaîne de réception et une deuxième position d'acheminement du signal radiofréquence vers une sortie auxiliaire de la chaîne de réception, sur laquelle est branché, lors de l'étalonnage, le récepteur auxiliaire étalonné,

le procédé comporte, en outre, une première phase d'étalonnage du bloc de sortie, consistant à calculer un écart de gain entre ladite sortie principale et ladite sortie auxiliaire, pour au moins la fréquence et la valeur de température du bloc d'entrée (62) considérées dans la première étape de calibration du bloc d'entrée, et, dans la seconde phase, l'étape de calcul du gain en puissance de la chaîne de réception prenant également en compte ledit écart de gain introduit par le bloc de sortie.

6. Dispositif d'étalonnage en puissance d'une chaîne de réception radiofréquence large bande, comprenant une chaîne de réception radiofréquence large bande apte à recevoir un signal radiofréquence d'entrée d'une antenne de réception (4), dans une bande de fréquence, la chaîne de réception (2, 60) comportant un bloc d'entrée (6, 62), un ensemble de traitement radiofréquence (8, 64), et un moyen apte à effectuer une analyse de spectre, **caractérisé en ce que** le bloc d'entrée (6, 62) comporte une source de bruit (26, 70) branchée en entrée d'un organe de basculement (28, 72) apte à connecter la source de bruit (26, 70) en entrée d'un bloc (24, 68) de circuits aval du bloc d'entrée, la sortie dudit bloc (24, 68) de circuits aval étant branchée en entrée de l'ensemble de traitement radiofréquence (8, 64), le dispositif étant adapté à mettre en œuvre :

   - une première phase d'étalonnage du bloc d'entrée (6), comprenant, pour au moins une valeur de température dudit bloc d'entrée et une fréquence,

      une génération d'une densité spectrale de puissance de bruit donnée, au moyen de la source de bruit (26) sélectionnable et contrôlable du bloc d'entrée,
      puis un calcul et une mémorisation d'au moins une densité spectrale de puissance de bruit équivalente ramenée en entrée dudit bloc d'entrée,

   - une deuxième phase d'étalonnage du gain en puissance de la chaîne de réception comprenant :

      - une génération d'une densité spectrale de puissance de bruit donnée,
      - une mesure d'une densité spectrale de puissance de bruit en sortie de la chaîne de réception,
      - un calcul du gain en puissance de la chaîne de réception en fonction de la densité spectrale de puissance de bruit en sortie de la chaîne de réception et de la densité spectrale de puissance de bruit équivalente ramenée en entrée correspondant à la densité spectrale de puissance de bruit donnée générée dans l'étape de génération.

7. Dispositif selon la revendication 6, **caractérisé en ce que**, ladite chaîne de réception (2, 60) ayant un bruit de fond propre, la puissance du bruit introduit par ladite source de bruit (26, 70) est supérieure à la puissance dudit bruit de fond propre de la chaîne de réception.

8. Dispositif selon la revendication 6 ou la revendication 7, **caractérisé en ce que** l'organe de basculement est un commutateur apte à basculer entre une première position (POS$_1$) d'injection, dans le bloc (24, 68) de circuits aval du bloc d'entrée, du signal radiofréquence d'entrée, et une deuxième position (POS$_2$) d'injection, dans le bloc (24, 68) de circuits aval du bloc d'entrée, du bruit généré par la source de bruit (26, 70).

9. Dispositif selon l'une quelconque des revendications 6 à 8, **caractérisé en ce que** ladite source de bruit (26, 70) est une diode à bruit.

10. Dispositif selon l'une quelconque des revendications 6 à 9, **caractérisé en ce que** le moyen apte à effectuer une analyse de spectre est un module de traitement (14) dont est muni l'ensemble de traitement radiofréquence (8), la mesure de la densité spectrale de puissance de bruit en sortie de la chaîne de réception (2) étant obtenue en sortie dudit module de traitement.

11. Dispositif selon l'une quelconque des revendications 6 à 9, **caractérisé en ce qu'**il comporte en outre un bloc de sortie (74), branché en sortie de l'ensemble de traitement radiofréquence (64), comprenant un organe de basculement (76) propre à basculer entre une première position d'acheminement du signal radiofréquence vers une sortie principale de la chaîne de réception (60) et une deuxième position d'acheminement du signal radiofréquence vers une sortie auxiliaire de la chaîne de réception (60), le moyen apte à effectuer une analyse de spectre étant un récepteur auxiliaire étalonné comprenant un analyseur de spectre et branché, lors de l'étalonnage, à la sortie auxiliaire.

12. Dispositif de radiogoniométrie comprenant une pluralité de chaînes de réception radiofréquence (110, 120, 130, 140) large bande, branchée chacune à une antenne de réception (A$_1$, A$_2$, A$_3$, A$_4$), et une unité de calcul (150) apte à calculer un angle d'incidence d'un signal radiofréquence reçu par lesdites antennes de réception, **caractérisé en ce qu'**il comporte, pour chacune desdites chaînes de réception (110, 120, 130, 140), un dispositif d'étalonnage en puissance selon l'une quelconque des revendications 6 à 11.

**Patentansprüche**

1. Verfahren zur Leistungskalibrierung einer Breitband-Radiofrequenz-Empfangskette, die in der Lage ist, in einem Frequenzband ein Eingangsradiofrequenzsignal einer Empfangsantenne (4) zu empfangen, das in einer Kalibrierungsvorrichtung implementiert wird, die die Breitband-Radiofrequenz-Empfangskette und ein Mittel aufweist, das in der Lage ist, eine Spektrumanalyse durchzuführen, wobei die Empfangskette einen Eingangsblock (6) aufweist, der am Eingang einer Radiofrequenzverarbeitungseinheit (8) angeschlossen ist, wobei das Verfahren **dadurch gekennzeichnet ist, dass** es aufweist:

   - eine erste Phase (40) des Kalibrierens des Eingangsblocks (6), aufweisend, für mindestens einen Temperaturwert des Eingangsblocks und eine Frequenz, ein Erzeugen einer gegebenen Rauschleistungsspektraldichte mittels einer auswählbaren und steuerbaren Rauschquelle (26) des Eingangsblocks und anschließend Schritte zum Berechnen und Speichern mindestens einer äquivalenten Rauschleistungsspektraldichte, die zum Eingang des Eingangsblocks zurückgeführt wird,
   - eine zweite Phase (42) des Kalibrierens der Leistungsverstärkung der Empfangskette, aufweisend die folgenden Schritte:

      - Erzeugen (50) einer gegebenen Rauschleistungsspektraldichte,
      - Messen (50) einer Rauschleistungsspektraldichte am Ausgang der Empfangskette,
      - Berechnen (52) der Leistungsverstärkung der Empfangskette in Abhängigkeit von der Rauschleistungsspektraldichte am Ausgang der Empfangskette und der zum Eingang zurückgeführten äquivalenten Rauschleistungsspektraldichte entsprechend der gegebenen, im Erzeugungsschritt (50) erzeugten Rauschleistungsspektraldichte.

2. Verfahren gemäß Anspruch 1, **dadurch gekennzeichnet, dass** das Berechnen in der ersten Phase des Kalibrierens des Eingangsblocks die folgenden Schritte aufweist:

   - Erhalten (44) einer Leistungsverstärkung des Eingangsblocks (6) für den Temperaturwert und die Frequenz,
   - Erzeugen eines Rauschens mit einer gegebenen Rauschleistungsspektraldichte und Messen (46) einer Rauschleistungsspektraldichte am Ausgang des Eingangsblocks,
   - Berechnen (48) einer zum Eingang des Eingangsblocks zurückgeführten äquivalenten Rauschleistungsspektraldichte in Abhängigkeit von der Leistungsverstärkung des Eingangsblocks und der Rauschleistungsspektraldichte am Ausgang des Eingangsblocks.

3. Verfahren gemäß Anspruch 1 oder Anspruch 2, **dadurch gekennzeichnet, dass** die erste Phase des Kalibrierens des Eingangsblocks (6) für eine Mehrzahl von Frequenzen im Frequenzband der Empfangskette und/oder eine Mehrzahl von Temperaturwerten des Eingangsblocks wiederholt wird.

4. Verfahren gemäß irgendeinem der Ansprüche 1 bis 3, **dadurch gekennzeichnet, dass** das Mittel, das in der Lage ist, eine Spektrumanalyse durchzuführen, ein Verarbeitungsmodul (14) der Radiofrequenzverarbeitungseinheit (8) ist, und das Messen der Rauschleistungsspektraldichte am Ausgang der Empfangskette am Ausgang des Verarbeitungsmoduls erhalten wird.

5. Verfahren gemäß irgendeinem der Ansprüche 1 bis 3, **dadurch gekennzeichnet, dass** das Mittel, das in der Lage ist, eine Spektrumanalyse durchzuführen, ein kalibrierter Hilfsempfänger ist, der einen Spektrumanalysator aufweist, und dass die Empfangskette einen Ausgangsblock (74) aufweist, der am Ausgang der Radiofrequenzverarbeitungsanordnung (64) angeschlossen ist, geeignet zum Umschalten zwischen einer ersten Position zum Leiten des Radiofrequenzsignals zu einem Hauptausgang der Empfangskette und einer zweiten Position zum Leiten des Radiofrequenzsignals zu einem Hilfsausgang der Empfangskette, wo der kalibrierte Hilfsempfänger beim Kalibrieren angeschlossen ist, das Verfahren ferner aufweist eine erste Phase des Kalibrierens des Ausgangsblocks, die darin besteht, eine Verstärkungsdifferenz zwischen dem Hauptausgang und dem Hilfsausgang für mindestens die Frequenz und den Temperaturwert des Eingangsblocks (62) zu berechnen, die im ersten Schritt des Kalibrierens des Eingangsblocks berücksichtigt werden, und in der zweiten Phase den Schritt des Berechnens der Leistungsverstärkung der Empfangskette auch unter Berücksichtigung der durch den Ausgangsblock eingeführten Verstärkungsdifferenz.

6. Vorrichtung zur Leistungskalibrierung einer Breitband-Radiofrequenz-Empfangskette, aufweisend eine Breitband-Radiofrequenz-Empfangskette, die in der Lage ist, ein Eingangsradiofrequenzsignal einer Empfangsantenne (4) in einem Frequenzband zu empfangen, wobei die Empfangskette (2, 60) einen Eingangsblock (6, 62), eine Radiofrequenzverarbeitungsanordnung (8, 64) und ein Mittel aufweist, das in der Lage sind, eine Spektrumanalyse durchzuführen,
**dadurch gekennzeichnet, dass** der Eingangsblock (6, 62) eine Rauschquelle (26, 70) aufweist, die am Eingang eines Schaltelements (28, 72) angeschlossen ist, das in der Lage ist, die Rauschquelle (26, 70) am Eingang eines Stromabwärtsschaltungsblocks (24, 68) des Eingangsblocks zu verbinden, wobei der Ausgang des Stromabwärtsschaltungsblocks (24, 68) am Eingang der Radiofrequenzverarbeitungsanordnung (8, 64) angeschlossen ist, wobei die Vorrichtung eingerichtet ist, um durchzuführen:

- eine erste Phase des Kalibrierens des Eingangsblocks (6), aufweisend, für mindestens einen Temperaturwert des Eingangsblocks und eine Frequenz:

ein Erzeugen einer gegebenen Rauschleistungsspektraldichte mittels der auswählbaren und steuerbaren Rauschquelle (26) des Eingangsblocks,
dann ein Berechnen und ein Speichern von mindestens einer äquivalenten Rauschleistungsspektraldichte, die zum Eingang des Eingangsblocks zurückgeführt wird,

- eine zweite Phase des Kalibrierens der Leistungsverstärkung der Empfangskette, aufweisend:

- ein Erzeugen einer gegebenen Rauschleistungsspektraldichte,
- ein Messen einer Rauschleistungsspektraldichte am Ausgang der Empfangskette,
- ein Berechnen der Leistungsverstärkung der Empfangskette in Abhängigkeit von der Rauschleistungsspektraldichte am Ausgang der Empfangskette und der äquivalenten Rauschleistungsspektraldichte, die zum Eingang zurückgeführt wird, entsprechend der gegebenen, im Erzeugungsschritt erzeugten Rauschleistungsspektraldichte.

7. Vorrichtung gemäß Anspruch 6, **dadurch gekennzeichnet, dass** die Empfangskette (2, 60) ein eigenes Hintergrundrauschen hat und die Leistung des von der Rauschquelle (26, 70) eingebrachten Rauschens größer ist als die Leistung des eigenen Hintergrundrauschens der Empfangskette.

8. Vorrichtung gemäß Anspruch 6 oder Anspruch 7, **dadurch gekennzeichnet, dass** das Schaltelement ein Schalter ist, der in der Lage ist, zwischen einer ersten Position ($POS_1$) zum Einspeisen des Eingangsradiofrequenzsignals in den Stromabwärtsschaltungsblock (24, 68) des Eingangsblocks und einer zweiten Position ($POS_2$) zum Einspeisen des von der Rauschquelle (26, 70) erzeugten Rauschens in den Stromabwärtsschaltungsblock (24, 68) des Eingangsblocks umzuschalten.

9. Vorrichtung gemäß irgendeinem der Ansprüche 6 bis 8, **dadurch gekennzeichnet, dass** die Rauschquelle (26, 70) eine Rauschdiode ist.

10. Vorrichtung gemäß irgendeinem der Ansprüche 6 bis 9, **dadurch gekennzeichnet, dass** das Mittel, das in der Lage ist, eine Spektrumanalyse durchzuführen, ein Verarbeitungsmodul (14) ist, mit dem die Radiofrequenzverarbeitungseinheit (8) ausgestattet ist, wobei das Messen der Rauschleistungsspektraldichte am Ausgang der Empfangskette (2) am Ausgang des Verarbeitungsmoduls erhalten wird.

11. Vorrichtung gemäß irgendeinem der Ansprüche 6 bis 9, **dadurch gekennzeichnet, dass** sie ferner aufweist einen Ausgangsblock (74), der am Ausgang der Radiofrequenzverarbeitungsanordnung (64) angeschlossen ist, aufweisend ein Schaltelement (76), das in der Lage ist, zwischen einer ersten Position zum Leiten des Radiofrequenzsignals zu einem Hauptausgang der Empfangskette (60) und einer zweiten Position zum Leiten des Radiofrequenzsignals zu einem Hilfsausgang der Empfangskette (60) umzuschalten, wobei das Mittel, das in der Lage ist, eine Spektrumanalyse durchzuführen, ein kalibrierter Hilfsempfänger ist, der einen Spektrumanalysator aufweist und beim Kalibrieren am Hilfsausgang angeschlossen ist.

12. Funkpeilungsvorrichtung, aufweisend eine Mehrzahl von Breitband-Radiofrequenz-Empfangsketten (110, 120, 130, 140), die jeweils an einer Empfangsantenne ($A_1$; $A_2$, $A_3$, $A_4$) angeschlossen sind, und eine Recheneinheit (150), die in der Lage ist, einen Einfallswinkel eines von den Empfangsantennen empfangenen Radiofrequenzsignals zu berechnen, **dadurch gekennzeichnet, dass** sie für jede der Empfangsketten (110, 120, 130, 140) eine Vorrichtung zur Leistungskalibrierung gemäß irgendeinem der Ansprüche 6 bis 11 aufweist.

**Claims**

1. A method for calibrating the power of a wideband radio frequency receive chain, able to receive an input radio frequency signal from a receiving antenna (4), in a frequency band, implemented in a calibration device comprising said wideband radio frequency receive chain and a means able to perform a spectral analysis, said receive chain including an input block (6) connected at the input of a radio frequency processing assembly (8),
the method being **characterized in that** it comprises:

- a first calibration phase (40) of the input block (6), comprising, for at least one temperature value of said input block and a frequency, generating a given power spectral density of noise, using a noise source (26) able to be selected and controlled from the input block, then computing and storing at least one equivalent power spectral density of noise returned at the input of the input block,
- a second calibration phase (42) of the power gain of the receive chain, comprising the following steps:

- generating (50) a given power spectral density of noise,
- measuring (50) a power spectral density of noise at the output of the receive chain,
- computing (52) a power gain of the receive chain as a function of the power spectral density of noise at the output of the receive chain and the equivalent power spectral density of noise returned at the input corresponding to the given power spectral density of noise generated in the generating step (50).

2. The method according to claim 1, **characterized in that**, in the first calibration phase of the input block, the computation comprises the following steps:

- obtaining (44) a power gain of the input block (6) for said temperature value and said frequency,
- generating a noise having a given power spectral density of noise and measuring (46) a power spectral density of noise at the output of the input block,
- computing (48) an equivalent power spectral density of noise brought down to the input of said input block as a function of the power gain of the input block and the power spectral density of noise at the output of the input block.

3. The method according to claim 1 or claim 2, **characterized in that** the first calibration phase of the input block (6) is repeated for a plurality of frequencies in the frequency band of the receive chain and/or a plurality of temperature values of the input block.

4. The method according to any one of claims 1 to 3, **characterized in that**, the means able to perform a spectral analysis being a processing module (14) of the radio frequency processing assembly (8), the measurement of the power spectral density of noise at the output of the receive chain is obtained at the output of said processing module.

5. The method according to any one of claims 1 to 3, **characterized in that** the means able to perform a spectral analysis being a calibrated auxiliary receiver comprising a spectral analyzer and **in that** the receive chain including an output block (74) connected to the output of the radio frequency processing assembly (64), able to switch between a first position for conveying the radio frequency signal toward a primary output of the receive chain and a second position for conveying the radio frequency signal toward an auxiliary output of the receive chain, on which the calibrated auxiliary receiver is connected during calibration, the method further comprises a first phase for calibration of the output block, consisting of computing a gain deviation between said primary output and said auxiliary output, for at least the frequency and the temperature value of the input block (62) considered in the first step for calibration of the input block, and, in the second phase, the step for computing the power gain of the receive chain also taking into account said gain deviation introduced by the output block.

6. A device for calibrating the power of a wideband radio frequency receive chain, comprising a wideband radio frequency receive chain able to receive an input radio frequency signal from a receiving antenna (4), in a frequency band, the receive chain (2, 60) including an input block (6, 62), a radio frequency processing assembly (8, 64), and a means able to perform a spectral analysis,
**characterized in that** the input block (6, 62) includes a noise source (26, 70) connected at the input of a switching member (28, 72) able to connect the noise source (26, 70) to the input of a block (24, 68) of downstream circuits of the input block, the output of said block of downstream circuits (24, 68) being connected at the input of the radio frequency processing assembly (8, 64), the device enabling the implementation of :

- a first calibration phase of the input block (6), comprising, for at least one temperature value of said input block and a frequency,

generating a given power spectral density of noise, using a noise source (26) able to be selected and controlled from the input block,
then computing and storing at least one equivalent power spectral density of noise returned at the input of the input block,

- a second calibration phase of the power gain of the receive chain, comprising:

  - generating a given power spectral density of noise,
  - measuring a power spectral density of noise at the output of the receive chain,
  - computing a power gain of the receive chain as a function of the power spectral density of noise at the output of the receive chain and the equivalent power spectral density of noise returned at the input corresponding to the given power spectral density of noise generated in the generating step.

7. The device according to claim 6, **characterized in that**, said receive chain (2, 60) having a specific background noise, the power of the noise introduced by said noise source (26, 70) is greater than the power of said background noise specific to the receive chain.

8. The device according to claim 6 or claim 7, **characterized in that** the switching member is a switch able to switch between a first position ($POS_1$) for injecting, in the block (24, 68) of downstream circuits of the input block, the input radio frequency signal, and a second injection position ($POS_2$), in the block (24, 68) of downstream circuits of the input block, noise generated by the noise source (26, 70).

9. The device according to any one of claims 6 to 8, **characterized in that** said noise source (26, 70) is a noise diode.

10. The device according to any one of claims 6 to 9, **characterized in that** the means able to perform a spectral analysis is a processing module (14) with which the radio frequency processing assembly (8) is provided, the measurement of the power spectral density of noise at the output of the receive chain (2) being obtained at the output of said processing module.

11. The device according to any one of claims 6 to 9, **characterized in that** it further comprises an output block (74), connected to the output of the radio frequency processing assembly (64), comprising a switching member (76) able to switch between a first position for conveying the radio frequency signal toward a primary output of the receive chain (60) and a second position for conveying the radio frequency signal toward an auxiliary output of the receive chain (60), the means able to perform a spectral analysis being a calibrated auxiliary receiver comprising a spectral analyzer and connected, during the calibration, to the auxiliary output.

12. A radiogoniometry device comprising a plurality of wideband radio frequency receive chains (110, 120, 130, 140), each connected to a receiving antenna ($A_1$, $A_2$, $A_3$, $A_4$), and a computation unit (150) able to compute an angle of incidence of a radio frequency signal received by said receiving antennas, **characterized in that** it comprises, for each of said receive chains (110, 120, 130, 140), a power calibration device according to any one of claims 6 to 11.

FIG.1

FIG.2

FIG.3

-44-

-46-

-48-

40

-50-

-52-

-54-

42

FIG.4

60

Gr

4

62

64

POS_a

74

$P_a$

66

72

68

70

POS_b

76

78

$S_r$

$P_r$

$S_{aux}$

FIG.5

EP 3 326 308 B1

FIG.6

FIG.7

FIG.8

$A_1$ 110 $R_1$ 100

$A_2$ 120 $R_2$

$A_3$ 130 $R_3$ -150-

$A_4$ 140 $R_4$

## FIG.9

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20090298422 A1
- US 20010012770 A1
- US 6700537 B1